Europäisches Patentamt

European Patent Office

Office européen des brevets

(19)

(11) Numéro de publication : **0 062 907**
**B1**

(12) **FASCICULE DE BREVET EUROPÉEN**

(45) Date de publication du fascicule du brevet :
21.03.84

(51) Int. Cl.³ : **G 01 N 21/07, B 04 B 5/04**

(21) Numéro de dépôt : **82103040.0**

(22) Date de dépôt : **08.04.82**

(54) **Dispositif pour délivrer une dose déterminée d'un échantillon de liquide dans une cellule et procédé associé.**

(30) Priorité : **14.04.81 FR 8107437**

(43) Date de publication de la demande :
**20.10.82 Bulletin 82/42**

(45) Mention de la délivrance du brevet :
**21.03.84 Bulletin 84/12**

(84) Etats contractants désignés :
**AT BE CH DE FR GB IT LI LU NL SE**

(56) Documents cités :
**FR-A- 2 195 345**
**US-A- 3 744 975**
**US-A- 3 899 296**
**US-A- 3 901 658**

(73) Titulaire : **Guigan, Jean**
**9, rue Jean Mermoz**
**F-75008 Paris (FR)**

(72) Inventeur : **Guigan, Jean**
**9, rue Jean Mermoz**
**F-75008 Paris (FR)**

(74) Mandataire : **Weinmiller, Jürgen et al**
**Zeppelinstrasse 63**
**D-8000 München 80 (DE)**

Jouve, 18, rue St-Denis, 75001 Paris, France

Dispositif pour délivrer une dose déterminée d'un échantillon de liquide dans une cellule et procédé associé

L'invention concerne un dispositif pour délivrer une dose déterminée d'un échantillon de liquide dans une cellule réceptrice portée par un rotor, en vue de son analyse, ledit rotor comprenant un boîtier à axe vertical dans lequel sont ménagées une cuvette annulaire munie de cloisons radiales délimitant des compartiments, servant de réceptacle pour ledit échantillon de liquide et plusieurs cellules réceptrices réparties régulièrement autour de la cuvette annulaire, des moyens d'acheminement du liquide étant prévus entre le compartiment réceptacle et chaque cellule réceptrice.

Dans les dispositifs actuellement connus, pour remplir les cellules réceptrices avec une quantité déterminée d'un échantillon de liquide, on introduit celui-ci à l'aide d'une pipette dans chacun des compartiments. Par mise en rotation du rotor on chasse ensuite le liquide contenu dans les différents compartiments vers les cellules réceptrices associées ; toutefois l'autonomie de fonctionnement du dispositif se trouve limitée du fait de l'obligation de disposer de pipettes et de placer le rotor devant celles-ci pour le remplissage des compartiments.

La présente invention permet notamment de remédier à ces inconvénients.

Elle a pour objet un dispositif pour délivrer une dose déterminée d'un échantillon de liquide dans une cellule réceptrice portée par un rotor, en vue de son analyse, ledit rotor comprenant un boîtier à axe vertical dans lequel est ménagée une cuvette annulaire munie de cloisons radiales délimitant des compartiments servant de réceptacle pour ledit échantillon de liquide, chaque compartiment .étant associé avec au moins une cellule réceptrice, les cellules réceptrices réparties régulièrement autour de la cuvette annulaire, des moyens d'acheminement du liquide étant prévus entre chaque compartiment de la cuvette et ladite cellule réceptrice, ledit dispositif étant caractérisé par le fait que ces moyens d'acheminement comprennent une chambre de dosage communiquant avec le compartiment réceptacle par un orifice, dit orifice d'entrée, ladite chambre de dosage présentant un second orifice, de préférence capillaire, dit orifice de sortie, les deux orifices délimitant pour la chambre de dosage un volume égal à ladite dose déterminée, des moyens étant prévus à la sortie de ladite chambre de dosage pour diriger le liquide issu de celle-ci, soit vers une chambre de trop plein lorsque le rotor est mis en rotation dans un premier sens, soit vers ladite cellule réceptrice lorsque le rotor est mis en rotation en sens inverse.

Selon un mode d'exécution conforme à l'invention, lesdits moyens prévus à la sortie de la chambre de dosage comportent un canal d'écoulement allant de la chambre de dosage à la cellule réceptrice et sensiblement radial, ledit canal présentant immédiatement après l'orifice de sortie une dérivation menant à la chambre de trop plein, la dérivation étant située par rapport audit canal du même côté que la chambre de dosage.

Avantageusement, au moins au niveau de ladite dérivation, la paroi du canal d'écoulement est incurvée de manière à éviter l'entrée de liquide issu de la chambre de dosage dans la chambre de trop plein lorsque le rotor tourne dans ledit sens inverse.

Un dispositif conforme à l'invention peut également comporter une ou plusieurs des caractéristiques suivantes :

— l'orifice d'entrée, mettant en communication un compartiment de la cuvette annulaire et la chambre de dosage, est situé au voisinage d'une cloison radiale, telle que la rotation du rotor dans ledit premier sens entraîne la propagation du liquide contenu dans le compartiment vers cette cloison,

— l'orifice de sortie, mettant en communication la chambre de dosage et le canal d'écoulement, est situé au voisinage d'une cloison radiale telle que la rotation du rotor dans ledit sens inverse entraîne la propagation du liquide contenu dans la chambre vers cette cloison,

— la configuration de la chambre de trop plein est telle que le liquide pénétrant dans cette chambre, lorsque le rotor tourne dans ledit premier sens, y soit conservé lorsque le rotor tourne dans le sens inverse,

— le compartiment recevant le liquide présente un profil incurvé, l'orifice d'entrée dans la chambre de dosage étant situé au voisinage de la partie supérieure dudit profil incurvé,

— la chambre de dosage présente un profil incurvé, l'orifice de sortie étant situé au voisinage de la partie supérieure dudit profil incurvé,

— la chambre de trop plein présente une partie incurvée, la dérivation issue du canal d'écoulement débouchant au voisinage de la partie supérieure de ladite partie incurvée,

— un compartiment de la cuvette annulaire peut être utilisé pour alimenter en liquide plusieurs chambres de dosage,

— la cellule réceptrice peut être utilisée comme cellule d'analyse et comporte une cloison supérieure présentant un orifice pour l'échappement de l'air,

— la cellule réceptrice peut être utilisée comme cellule de déversement et dans ce cas communique avec une cellule d'analyse comportant un orifice périphérique d'éjection de liquide permettant également l'échappement de l'air,

— la chambre de trop plein comporte un orifice d'évacuation de liquide.

L'invention a également pour objet un procédé pour délivrer une dose déterminée d'un échantillon de liquide et mettant en œuvre le dispositif décrit ci-dessus.

Ce procédé est caractérisé par le fait que dans un premier temps, on introduit l'échantillon liquide en léger excès par rapport à la contenance de la chambre de dosage dans un compartiment de la cuvette annulaire, puis, dans un deuxième temps, on met le rotor en rotation dans ledit premier sens, ce qui entraîne le déplacement de tout le liquide contenu dans ledit compartiment vers la chambre de dosage au travers de l'orifice d'entrée, le remplissage de la chambre de dosage, l'excédent de liquide étant chassé de ladite chambre de dosage par l'orifice de sortie vers la chambre de trop plein, enfin, dans un troisième temps, on met le rotor en rotation dans ledit sens inverse, ce qui entraîne le déplacement de tout le liquide contenu dans la chambre de dosage vers la cellule réceptrice. La mise en rotation du rotor est déjà décrite dans le document ED-A-0 054 262 (état de la technique selon l'article 54 (3) CBE).

L'invention sera décrite ci-après plus en détail à l'aide de deux mises en œuvre et du dessin annexé dans lequel :

la figure 1 représente schématiquement une vue de dessus avec arrachement partiel d'un dispositif conforme à l'invention,

les figures 2, 3 et 4 sont des vues semblables à la figure 1 mettant en évidence des phases successives du procédé conforme à l'invention,

la figure 5 est une section selon les lignes V-V de la figure 1,

la figure 6 est une section selon les lignes VI-VI de la figure 1,

la figure 7 est une section selon les lignes VII-VII de la figure 1,

la figure 8 est une section selon les lignes VIII-VIII de la figure 1,

la figure 9 est une section selon les lignes IX-IX de la figure 1,

la figure 10 représente une variante du mode de réalisation de la figure 1.

Un rotor d'analyse 1 comprend un boîtier 2 à axe vertical, muni d'un couvercle 22 ; dans ce boîtier sont ménagés des compartiments 3 formés par le cloisonnement d'une cuvette annulaire au moyen de cloisons radiales telles que 4.

Il est prévu également un orifice central 23. Le couvercle 22 présente des ouvertures 24 permettant de remplir les compartiments 3.

Le boîtier 2 comporte à sa périphérie des cellules réceptrices telles que 5, régulièrement réparties autour de la cuvette annulaire. L'ensemble du système est en matière plastique transparente et peut être mis en rotation par des moyens non représentés.

Les cellules réceptrices 5 sont associées à des cellules d'analyse 25 avec lesquelles elles communiquent. Les cellules 25 sont reliées à l'orifice central 23 au moyen de canaux 26. Une telle disposition de cellules associées a déjà été proposée dans la demande de brevet européen EP-A-0 054 262 déposée le 10.12.81 par le Demandeur. Dans les cellules d'analyse 25 sont disposés des supports d'accrochage appropriés, tels que des billes 27 par exemple.

Conformément à l'invention le compartiment 3 communique par un orifice 6, dit orifice d'entrée, avec une chambre de dosage 7.

La chambre de dosage 7 possède également un orifice 8 dit orifice de sortie, qui est capillaire.

L'orifice 8 débouche dans un canal d'écoulement 9 menant vers la cellule réceptrice 5 ; ce canal est sensiblement radial et présente immédiatement après l'orifice de sortie 8 une dérivation 10 menant vers une chambre de trop plein 11.

La chambre de dosage 7 et la dérivation 10 sont situées d'un même côté par rapport au canal d'écoulement 9.

Le fonctionnement du dispositif est le suivant :

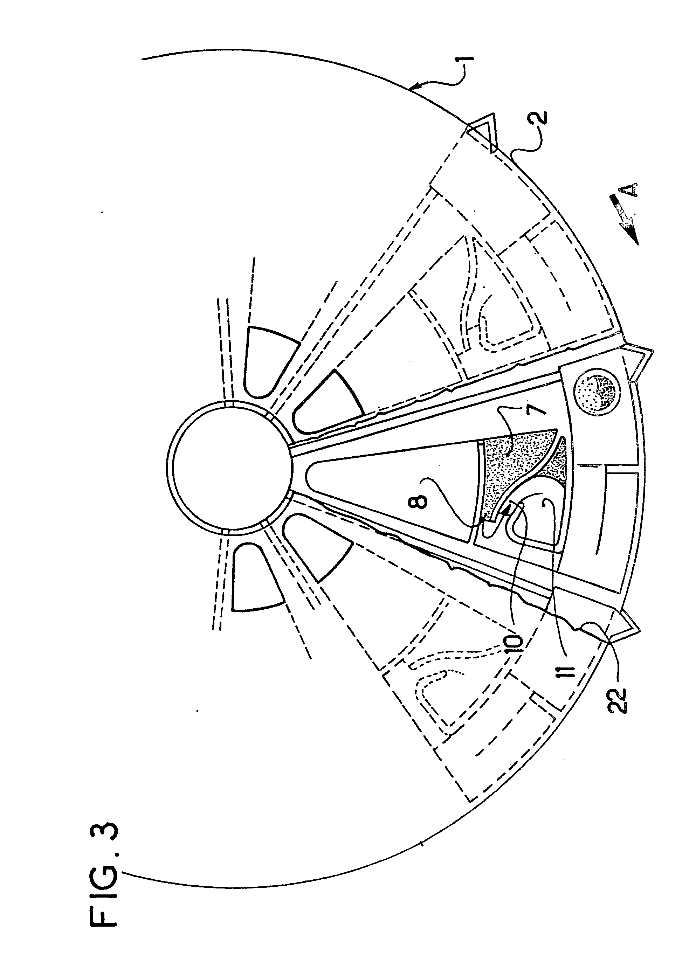

Une certaine quantité d'échantillon liquide 28, excédentaire par rapport au volume contenu dans la chambre de dosage 7, étant introduite dans un compartiment 3 par l'ouverture 24, on met en rotation le rotor 1 dans le sens de la flèche A ; sous l'effet de la force centrifuge, le liquide contenu dans le compartiment 3 est propulsé dans la chambre de dosage 7 au travers de l'orifice d'entrée 6. La rotation se poursuivant dans le sens de la flèche A, après remplissage total de la chambre de dosage 7, l'excédent de liquide, issu de ladite chambre 7 par l'orifice de sortie 8, du fait de la rotation est dirigé dans la chambre de trop plein 11 en empruntant la dérivation 10, prévue à proximité immédiate de l'orifice de sortie 8, ainsi que cela est représenté sur la figure 3.

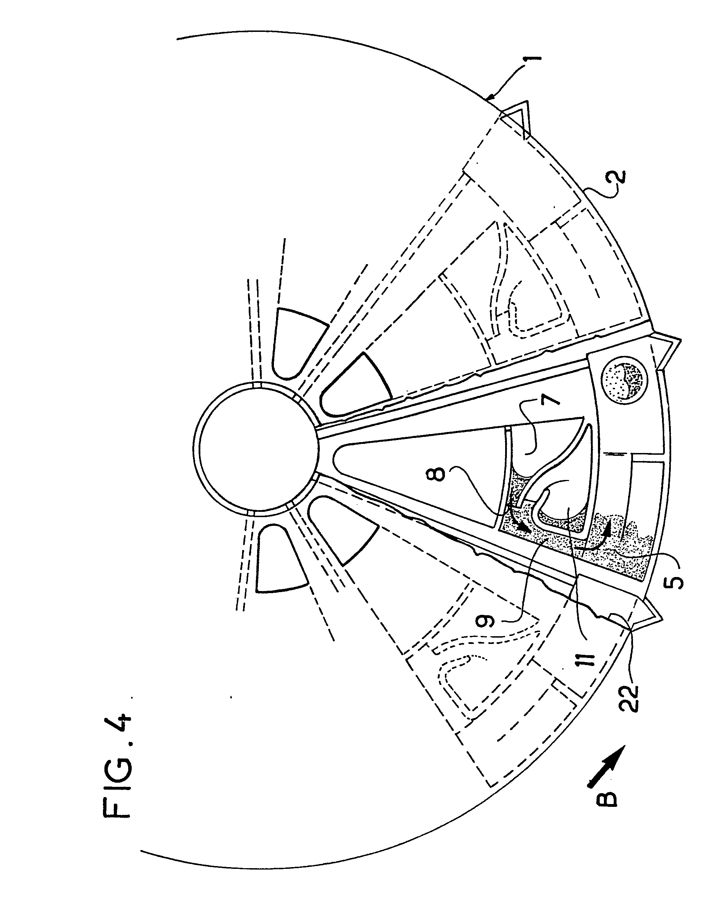

A ce point du processus, on fait tourner le rotor dans le sens inverse désigné par la flèche B, voir la figure 4. Tout le liquide contenu dans la chambre de dosage 7 est expulsé de cette chambre par l'orifice 8 et, empruntant le canal d'écoulement 9, dirigé vers la cellule réceptrice 5 ; cependant que l'excédent de liquide présent dans la chambre de trop plein 11 est conservé dans celle-ci ainsi que cela est représenté sur la figure 4. En ce qui concerne ce dernier point, une variante de l'invention peut consister à prévoir dans la chambre de trop plein 11 un orifice d'évacuation pour l'excédent de liquide, celui-ci étant alors dirigé vers un réceptacle approprié.

On voit donc que la mise en œuvre du dispositif et du procédé associé conformes à l'invention a permis de déverser dans la cellule réceptrice 5 une dose déterminée d'un échantillon liquide, à savoir le volume délimité par la contenance de la chambre de dosage 7.

A titre illustratif le volume de la chambre de dosage peut être de 100 microlitres, celui de la chambre de trop plein pouvant être d'environ 50 microlitres. Dans ce cas, on introduit initialement dans le compartiment 3 un volume d'échantillon liquide d'environ 130 microlitres.

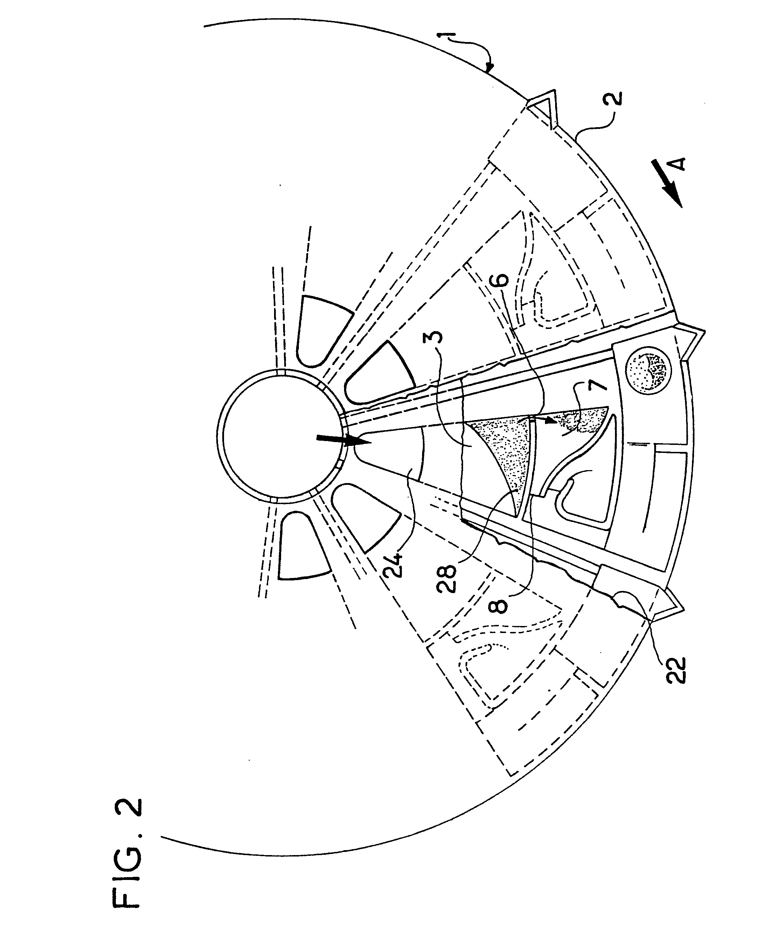

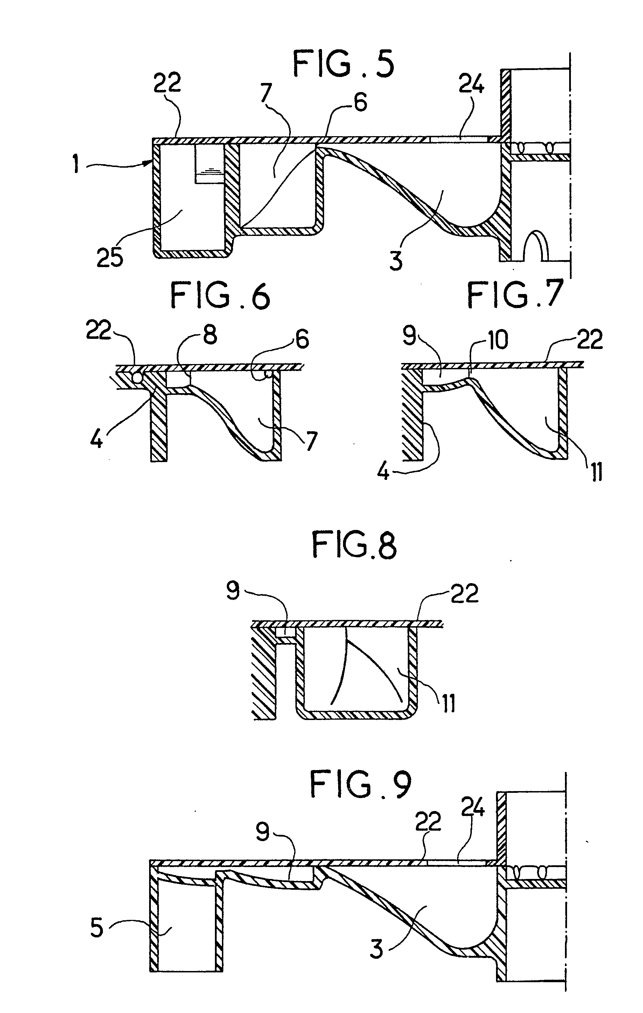

Comme on peut le constater en se reportant à la figure 5, qui représente une section le long d'une cloison radiale, le profil du compartiment 3 recevant l'échantillon liquide est incurvé et l'orifice d'entrée 6 vers la chambre de dosage 7 est situé au voisinage de la partie supérieure dudit profil incurvé. De plus comme on peut le constater en se reportant à la figure 2, l'orifice d'entrée 6 est situé à proximité d'une cloison 4 qui délimite le compartiment 3, cloison vers laquelle se propage le liquide contenu dans ledit compartiment 3 lorsque le rotor est mis en mouvement dans le sens de la flèche A, du fait de la force centrifuge.

La chambre de dosage 7 présente également un profil incurvé, l'orifice de sortie 8 étant situé au voisinage de la partie supérieure du profil incurvé, ainsi que cela est représenté sur la figure 6, qui est une section passant par cet orifice 8.

La figure 7 est une section passant sensiblement selon l'axe de la dérivation 10. Au niveau de cette dérivation, la paroi du canal 9 est légèrement incurvée de manière à éviter l'entrée de liquide issu de la chambre 7 dans la chambre de trop plein 11 lorsque le rotor tourne dans le sens indiqué par la flèche B.

Sur cette figure 7, on peut également constater que la chambre de trop plein 11 comporte une partie incurvée, la dérivation 10 issue du canal d'écoulement 9 débouchant au voisinage de la partie supérieure de cette partie incurvée.

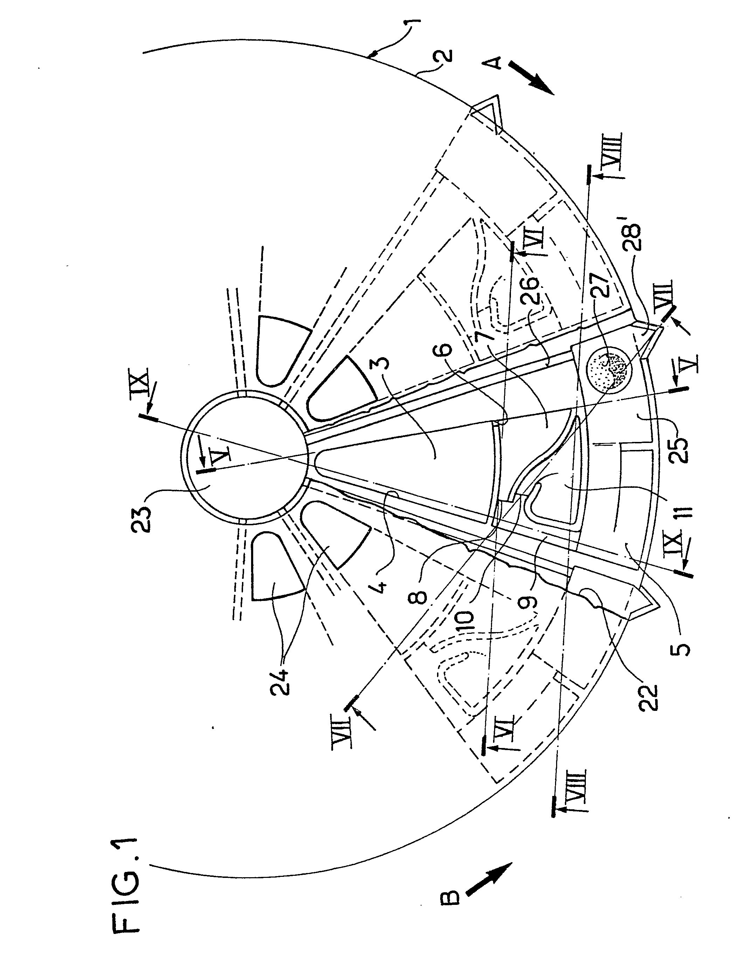

La figure 8, qui est une coupe selon la ligne VIII-VIII de la figure 1, permet de mieux comprendre la structure de la chambre de trop plein 11, qui comporte une portion dans laquelle vient se loger le trop plein lorsque le rotor tourne dans le sens de la flèche A et une portion dans laquelle il vient se loger lorsque le rotor tourne dans le sens de la flèche B.

Il serait également possible de munir la chambre de trop plein 11 d'un orifice d'évacuation à sa partie inférieure de manière à éliminer le trop plein après rotation dans le sens de la flèche A.

Comme cela est représenté sur la figure 6, l'orifice de sortie 8 mettant en communication la chambre de dosage 7 et le canal d'écoulement 9 est situé au voisinage d'une cloison radiale 4 telle que la mise en rotation du rotor dans le sens défini par la flèche B entraîne la propagation du liquide contenu dans la chambre 7 le long de cette cloison 4.

La figure 9 est une section sensiblement selon l'axe du canal d'écoulement 9.

Un compartiment de la cuvette annulaire peut être utilisé pour alimenter en liquide une ou plusieurs chambres de dosage.

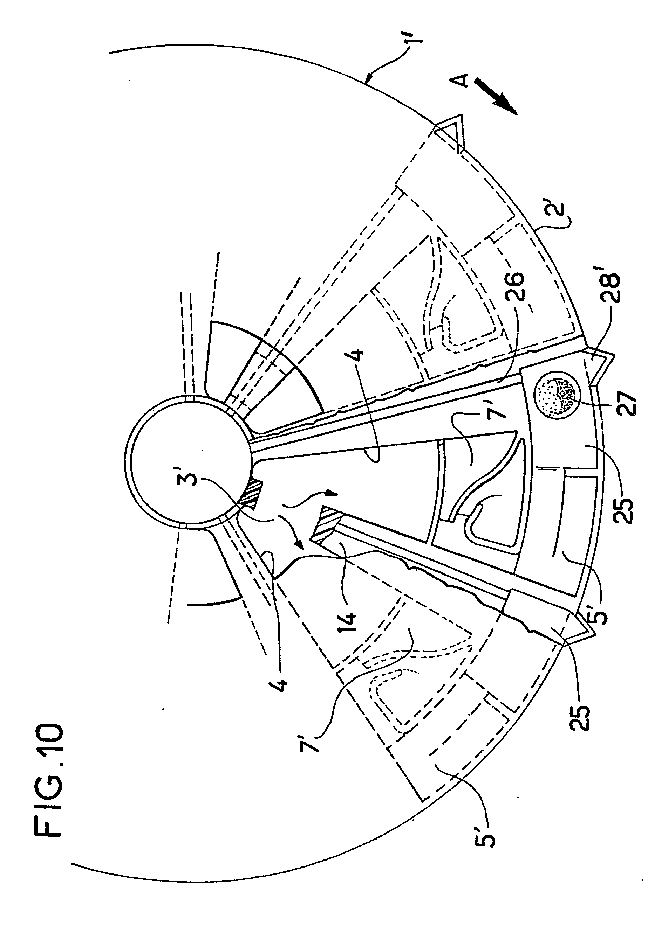

Un tel mode de réalisation a été schématiquement représenté sur la figure 10 où un même compartiment 3' peut servir à alimenter deux cellules réceptrices 5'. Un cloisonnement radial médian 14 assure la répartition du liquide vers les deux chambres de dosage 7' lors de la mise en rotation du rotor 1' dans le sens A.

Dans les exemples décrits et représentés, les cellules réceptrices sont utilisées comme cellules de déversement et elles communiquent avec les cellules d'analyse 25 comportant en particulier des orifices périphériques d'éjection 28' de liquide permettant également l'échappement de l'air.

Le support solide d'accrochage tel qu'une bille 27 est destiné à capter successivement une quantité d'un composé tel qu'un liquide biologique contenant une substance à analyser, puis une quantité d'un premier réactif dans lequel est fixé un indicateur biologique.

Les canaux 26 permettent l'acheminement d'un liquide de lavage vers chacune desdites cellules d'analyse 25, associée à une cellule de déversement recevant le composé contenant la substance à analyser, deux cellules associées communiquant au moyen d'un orifice.

Il est bien entendu possible d'alimenter les différents compartiments d'un même rotor avec des échantillons de liquides différents et dans ce cas le dispositif conforme à l'invention permettra des analyses simultanées.

Par ailleurs les cellules réceptrices peuvent être utilisées directement comme cellules d'analyse dans certains modes d'application. Dans ce cas, au niveau de ces cellules, des orifices permettent l'échappement de l'air.

**Revendications**

1. Dispositif pour délivrer une dose déterminée d'un échantillon de liquide dans une cellule réceptrice portée par un rotor (1), en vue de son analyse, ledit rotor comprenant un boîtier (2) à axe vertical dans lequel est ménagée une cuvette annulaire munie de cloisons radiales (4) délimitant des compartiments (3) servant de réceptacle pour ledit échantillon de liquide, chaque compartiment (3) étant associé avec au moins une cellule réceptrice (5, 5'), les cellules réceptrices (5, 5') étant réparties régulièrement autour de la cuvette annulaire et des moyens d'acheminement du liquide étant prévus entre chaque compartiment (3) de la cuvette et ladite cellule réceptrice, caractérisé par le fait que ces moyens d'acheminement comprennent une chambre de dosage (7), communiquant avec le compartiment réceptacle (3) par un orifice (6), dit orifice d'entrée, ladite chambre de dosage (7) présentant un second orifice (8), de préférence capillaire, dit orifice de sortie, les deux dits orifices (6, 8) délimitant pour la chambre de dosage (7) un volume égal à ladite dose déterminée, des moyens étant prévus à la sortie de ladite chambre de dosage (7) pour diriger le liquide issu de celle-ci soit vers une chambre de trop plein (11) lorsque le rotor (1) est mis en rotation dans un premier sens (a), soit vers ladite cellule réceptrice (5, 5') lorsque le rotor est mis en rotation en sens inverse (B).

2. Dispositif selon la revendication 1, caractérisé par le fait que lesdits moyens prévus à la sortie de la chambre de dosage (7) comportent un canal d'écoulement (9) allant de la chambre de dosage (7) à la cellule réceptrice (5), et sensiblement radial, ledit canal (9) présentant immédiatement après l'orifice de sortie (8) une dérivation (10) menant à la chambre de trop plein (11), la dérivation (10) étant située par rapport audit canal (9) du même côté que la chambre de dosage (7).

3. Dispositif selon la revendication 2, caractérisé par le fait qu'au moins au niveau de ladite dérivation (10) la paroi du canal (9) d'écoulement est incurvée de manière à éviter l'entrée de liquide issu de la chambre de dosage (7) dans la chambre de trop plein (11), lorsque le rotor est mis en rotation dans ledit sens inverse (B).

4. Dispositif selon l'une des revendications 1 à 3, caractérisé par le fait que l'orifice d'entrée (6) mettant en communication un compartiment (3) de la cuvette annulaire et la chambre de dosage (7) est situé au voisinage d'une des cloisons radiales (4), telle que la rotation du rotor (1) dans ledit premier sens (A) entraîne la propagation du liquide contenu dans le compartiment (3) vers cette cloison (4).

5. Dispositif selon l'une des revendications 2 à 4, caractérisé par le fait que l'orifice de sortie (8) mettant en communication la chambre de dosage (7) et le canal d'écoulement (9) est situé au voisinage d'une des cloisons radiales (4), telle que la rotation du rotor (1) dans ledit sens inverse (B) entraîne la propagation du liquide contenu dans la chambre de dosage (7) vers cette cloison (4).

6. Dispositif selon l'une des revendications 2 à 5, caractérisé par le fait que la configuration de la chambre de trop plein (11) est telle que le liquide (28) pénétrant dans cette chambre, lorsque le rotor (1) est mis en rotation dans ledit premier sens (A), y soit conservé lorsque le rotor (1) est mis en rotation dans le sens inverse (B).

7. Dispositif selon l'une des revendications 1 à 6, caractérisé par le fait que le compartiment (3) recevant le liquide (28) présente un premier profil incurvé, l'orifice d'entrée (6) dans la chambre de dosage (7) étant situé au voisinage de la partie supérieure dudit premier profil incurvé.

8. Dispositif selon l'une des revendications 1 à 7, caractérisé par le fait que la chambre de dosage (7) présente un deuxième profil incurvé, l'orifice de sortie (8) étant situé au voisinage de la partie supérieure dudit deuxième profil incurvé.

9. Dispositif selon l'une des revendications 2 à 8, caractérisé par le fait que la chambre de trop plein (11) présente une partie incurvée, la dérivation (10) issue du canal d'écoulement (9) débouchant au voisinage de la partie supérieure de ladite partie incurvée.

10. Dispositif selon l'une des revendications 1 à 9, caractérisé par le fait qu'un compartiment (3') de la cuvette annulaire est utilisé pour alimenter en liquide plusieurs chambres de dosage (7').

11. Dispositif selon l'une des revendications 1 à 30, caractérisé par le fait que la cellule réceptrice (5) est utilisée comme cellule d'analyse et comporte une cloison supérieure présentant un orifice pour l'échappement de l'air.

12. Dispositif selon l'une des revendications 1 à 10, caractérisé par le fait que la cellule réceptrice (5, 5') est utilisée comme cellule de déversement et communique avec une cellule d'analyse (25) comportant un orifice périphérique d'éjection (28') de liquide permettant également l'échappement de l'air.

13. Dispositif selon l'une des revendications 1 à 12, caractérisé par le fait que la chambre de trop plein (11) comporte un orifice d'évacuation de liquide.

14. Procédé pour délivrer une dose déterminée d'un échantillon de liquide dans une cellule, et mettant en œuvre le dispositif selon l'une des revendications 1 à 13, caractérisé par le fait que dans un premier temps on introduit l'échantillon liquide (28) en léger excès par rapport à la contenance de la chambre de dosage (7) dans un compartiment (3) de la cuvette annulaire, puis dans un deuxième temps, on met le rotor (1) en rotation dans ledit premier sens (A) ce qui entraîne le déplacement de tout le liquide (28) contenu dans ledit compartiment (3) vers la chambre de dosage (7) au travers de l'orifice d'entrée (6), le remplissage de la chambre de dosage (7), l'excédent de liquide (28) étant chassé de ladite chambre de dosage (7) par l'orifice de sortie (8) vers la chambre de trop plein (11), enfin, dans un troisième temps, on met le rotor (1) en rotation dans ledit sens inverse (B) ce qui entraîne le déplacement de tout le liquide (28) contenu dans la chambre de dosage (7) vers la cellule réceptrice (5).

**Claims**

1. An apparatus for delivering a predetermined amount of a liquid sample to a receiving cell which is carried by a rotor (1), in view of its analysis, said rotor comprising a container (2) having a vertical axis and containing an annular basin which has radial partitions (4) limiting compartments (3) for receiving said liquid sample, each compartment (3) being associated to at least one receptor cell (5, 5'), the receptor cells (5, 5') being regularly spaced out around the annular basin, and conveyor means for the liquid being provided between each compartment (3) of the basin and said receptor cell, characterized in that said conveyor means comprise a dosage chamber (7) communicating with the receptor compartment (3) via an opening (6) called inlet orifice, said dosage chamber (7) presenting a second orifice (8) preferably a capillary orifice, called outlet orifice, said two orifices (6, 8) defining for the dosage chamber a volume equal to said determined dose, means being provided at the outlet of said dosage chamber (7) to direct the liquid issued from the latter either towards an overflow chamber (11), when the rotor (1) is turning in a first direction (A), or to said receptor cell (5, 5'), when the rotor is turning in the opposite direction (B).

2. An apparatus according to claim 1, characterized in that said means provided at the outlet of the dosage chamber (7) comprise an outflow channel (9) extending essentially radially from the dosage chamber (7) to the receptor cell (5), said channel presenting immediately behind the outlet orifice (8) a branch (10) leading to the overflow chamber (11), the branch (10) being situated with respect to said channel (9) on the same side as the dosage chamber (7).

3. An apparatus according to claim 2, characterized in that at least in the vicinity of said branch (10), the wall of the outflow channel (9) is curved, so as to prevent the liquid issued from the dosage chamber (7) from entering into the oberflow chamber (11) when the rotor is turning in said opposite direction (B).

4. An apparatus according to one of the claims 1 to 3, characterized in that the inlet orifice (6) which puts into communication one compartment (3) of the annular basin and the dosage chamber (7) is situated adjacent to one of the radial partitions (4), so that due to the rotation of the rotor (1) in the said first direction (A), the liquid contained in the dosage chamber (7) is driven towards this partition (4).

5. An apparatus according to one of the claims 2 to 4, characterized in that the outlet orifice (8) putting said dosage chamber (7) into communication with said outflow channel (9) is situated adjacent one of said radial partitions (4) such that, due to the rotation of said rotor (1) in said opposite direction (B), the liquid contained in said dosage chamber (7) is driven towards said partition (4).

6. An apparatus according to one of the claims 2 to 5, characterized in that said overflow chamber (11) is arranged is such a manner that the liquid (28) which enters therein during rotation in said first direction (A) is retained therein during rotation of the rotor (1) in the opposite direction (B).

7. An apparatus according to one of the claims 1 to 6, characterized in that the compartment (3) receiving the liquid (28) presents a first curved profile, the inlet orifice (6) into the dosage chamber (7) being situated adjacent the upper part of said first curved profile.

8. An apparatus according to one of the claims 1 to 7, characterized in that the dosage chamber (7) presents a second curved profile, the outlet orifice (8) being situated adjacent the upper part of said second curved profile.

9. An apparatus according to one of the claims 2 to 8, characterised in that the overflow chamber (11) presents a curved part, the branch (10) issuing from the outflow channel (9) opening adjacent to the upper part of said curved part.

10. An apparatus according to one of the claims 1 to 9, characterized in that one compartment (3') of the annular basin is used to supply with liquid several dosage chambers (7').

11. An apparatus according to one of the claims 1 to 10, characterized in that the receptor cell (5) is used as analysis cell and comprises an upper partition presenting an air vent orifice.

12. An apparatus according to one of the claims 1 to 10, characterized in that the receptor cell (5, 5') is used as a pouring cell and communicates with an analysis cell (25) comprising a peripheral liquid ejection orifice (28') which also serves as an air vent.

13. An apparatus according to one of the claims 1 to 12, characterized in that the overflow chamber (11) comprises an orifice for evacuating liquid.

14. A method of delivering a predetermined dose of a liquid sample into a cell and using the apparatus according to one of the claims 1 to 13, characterized in that in a first step, the liquid sample (28), in a slight excess with respect to the volume of the dosage chamber (7), is introduced into a compartment (3) of the annular basin, then, in a second step, the rotor (1) is put into rotation according to said first direction (A), whereby all the liquid (28) contained in said compartment (3) is displaced into the dosage chamber (7) through the inlet orifice (6), the filling of the dosage chamber (7), the excess liquid (28) being removed from the dosage chamber (7) through the outlet orifice (8) into the overflow chamber (11), finally, in a third step, the rotor (1) is put into rotation in said opposite direction (B), which provokes the removal of all the liquid (28) contained in the dosage chamber (7) to the receptor cell (5).

**Ansprüche**

1. Vorrichtung zur Abgabe einer bestimmten Dosis einer Flüssigkeit zu Analysezwecken an eine Empfangszelle, die von einem Rotor (1) getragen wird, wobei der Rotor ein Gehäuse (2) mit senkrechter Achse aufweist, in dem eine ringförmige Schale mit radialen Trennwänden (4) angeordnet ist, die Abteile (3) begrenzen, welche als Aufnahmeabteile für die Flüssigkeitsprobe dienen, wobei jedes Abteil (3) mindestens einer Empfangszelle (5, 5') zugeordnet ist und die Empfangszellen (5, 5') gleichmäßig um die ringförmige Schale verteilt sind, und Transportmittel für die Beförderung der Flüssigkeit zwischen jedem Abteil (3) der Schale und der Empfangszelle vorgesehen sind, dadurch gekennzeichnet, daß diese Transportmittel eine Dosierkammer (7) aufweisen, die über eine Eingangsöffnung genannte Öffnung (6) mit dem Aufnahmeabteil (3) verbunden ist, wobei die Dosierkammer (7) eine zweite Öffnung (8) aufweist, vorzugsweise eine Kapillaröffnung, die Ausgangsöffnung genannt wird, und wobei die beiden Öffnungen (6, 8) für die Dosierkammer (7) ein Volumen bestimmen, das der bestimmten Dosis entspricht, daß am Ausgang der Dosierkammer Mittel vorgesehen sind, um die aus dieser Kammer kommende Flüssigkeit entweder zu einer Überlaufkammer (11) zu lenken, wenn der Rotor (1) in eine erste Richtung (A) in Rotation versetzt wird, oder zu der Empfangszelle (5, 5') wenn der Rotor in entgegengesetzter Richtung (B) in Rotation versetzt wird.

2. Vorrichtung nach Anspruch 1, dadurch gekennzeichnet, daß die am Ausgang der Dosierkammer (7) vorgesehenen Mittel einen Ablaufkanal (9) aufweisen, der von der Dosierkammer (7) bis zur Empfangszelle (5) reicht und im wesentlichen radial verläuft, wobei der Kanal (9) direkt nach der Ausgangsöffnung (8) eine Abzweigung (10) aufweist, die zur Überlaufkammer (11) führt, und die Abzweigung (10) sich in Bezug auf den kanal (9) auf der gleichen Seite wie die Dosierkammer (7) befindet.

3. Vorrichtung nach Anspruch 2, dadurch gekennzeichnet, daß die Wand des Ablaufkanals (9) zumindest in Höhe dieser Abzweigung (10) gekrümmt ist, um den Zugang der aus der Dosierkammer (7) kommenden Flüssigkeit zur Überlaufkammer (11) zu vermeiden, wenn der Rotor sich in umgekehrter Richtung (B) dreht.

4. Vorrichtung nach einem der Ansprüche 1 bis 3, dadurch gekennzeichnet, daß die Eingangsöffnung (6), die ein Abteil (3) der ringförmigen Schale mit der Dosierkammer (7) verbindet, sich in der Nähe einer der radialen Wände (4) befindet, so daß die Rotation des Rotors (1) in der genannten ersten Richtung (A) die Bewegung der sich im Abteil (3) befindlichen Flüssigkeit zu dieser Wand (4) bewirkt.

5. Vorrichtung nach einem der Ansprüche 2 bis 4, dadurch gekennzeichnet, daß die Ausgangsöffnung (8), die die Dosierkammer (7) mit dem Ablaufkanal (9) verbindet, sich in der Nähe einer der radialen Wände (4) befindet, so daß die Rotation des Rotors (1) in der umgekehrten Richtung (B) die Bewegung der in der Dosierkammer (7) enthaltenen Flüssigkeit zu dieser Wand bewirkt.

6. Vorrichtung nach einem der Ansprüche 2 bis 5, dadurch gekennzeichnet, daß die Anordnung der Überlaufkammer (7) so ist, daß die in die Kammer während der Rotation des Rotors (1) in der ersten Richtung (A) eindringende Flüssigkeit (28) in dieser Kammer bleibt, wenn der Rotor (1) sich in der umgekehrten Richtung (B) dreht.

7. Vorrichtung nach einem der Ansprüche 1 bis 6, dadurch gekennzeichnet, daß das Abteil (3), das die Flüssigkeit (28) empfängt, ein erstes gekrümmtes Profil hat, wobei die Eingangsöffnung (6) in die Dosierkammer (7) sich in der Nähe des oberen Teils dieses ersten gekrümmten Profils befindet.

8. Vorrichtung nach einem der Ansprüche 1 bis 7, dadurch gekennzeichnet, daß die Dosierkammer (7) ein zweites gekrümmtes Profil hat, wobei die Ausgangsöffnung (9) sich in der Nähe des oberen Teils dieses gekrümmten zweiten Profils befindet.

9. Vorrichtung nach einem der Ansprüche 2 bis 8, dadurch gekennzeichnet, daß die Überlaufkammer (11) einen gekrümmten Teil hat, wobei die vom Ablaufkanal (9) stammende Abzweigung (10) in der Nähe des oberen Teils des gekrümmten Teils mündet.

10. Vorrichtung nach einem der Ansprüche 1 bis 9, dadurch gekennzeichnet, daß ein Abteil (3') der ringförmigen Schale zur Flüssigkeitsversorgung mehrerer Dosierkammern (7') verwendet wird.

11. Vorrichtung nach einem der Ansprüche 1 bis 10, dadurch gekennzeichnet, daß die Empfangszelle (3) als Analysezelle verwendet wird und eine obere Wand aufweist, die eine Öffnung für den Luftauslaß enthält.

12. Vorrichtung nach einem der Ansprüche 1 bis 10, dadurch gekennzeichnet, daß die Empfangszelle (5, 5') als Ausschüttzelle verwendet wird und mit einer Analysezelle (25) verbunden ist, die eine periphere Flüssigkeitsausgußöffnung (28') aufweist, die außerdem den Luftaustritt ermöglicht.

13. Vorrichtung nach einem der Ansprüche 1 bis 12, dadurch gekennzeichnet, daß die Überlaufkammer (11) eine Flüssigkeitsablauföffnung aufweist.

14. Verfahren, um eine bestimmte Dosis einer Flüssigkeitsprobe in eine Zelle zu liefern, das die Vorrichtung nach einem der Ansprüche 1 bis 13, anwendet, dadurch gekennzeichnet, daß zuerst die Flüssigkeitsprobe (28) in leichtem Überschuß in Bezug auf das Fassungsvermögen der Dosierkammer (7) in ein Abteil (3) der ringförmigen Schale gebracht wird, dann der Rotor (1) in der ersten Richtung (A) in Rotation versetzt wird, was den Fluß der ganzen in diesem Abteil (3) enthaltenen Flüssigkeit (28) über die Eingangsöffnung (6) in die Dosierkammer (7) und das Füllen der Dosierkammer (7) bewirkt, wobei der Flüssigkeitsüberschuß (28) die Ausgangsöffnung (8) aus dieser Dosierkammer (7) in die Überlaufkammer (11) gedrückt wird, und schließlich der Rotor (1) in die entgegengesetzte Richtung (B) in Rotation versetzt wird, was den Fluß der ganzen in der Dosierkammer (7) enthaltenen Flüssigkeit (28) zur Empfangszelle (5) bewirkt.

FIG.1

0 062 907

FIG. 2

FIG.3

FIG.4

0 062 907

FIG . 5

22    7    6    24

1

25    3

FIG . 6

22    8    6

4    7

FIG . 7

9    10    22

4    11

FIG . 8

9    22

11

FIG . 9

9    22    24

5    3

FIG.10